# EUROPEAN PATENT SPECIFICATION

(11) **EP 0 784 600 B1**
(45) Date of publication and mention of the grant of the patent: **10.06.1998**
(21) Application number: 95934138.9
(22) Date of filing: 03.10.1995
(51) Int. Cl.: C02F 11/10, C02F 11/08, C02F 9/00

(54) **METHOD FOR OXIDATION OF ORGANIC WASTE LIQUORS**
VERFAHREN ZUR OXIDATION VON ORGANISCHEN ABFALLFLÜSSIGKEITEN
PROCEDE D'OXYDATION DE LIQUEURS ORGANIQUES EPUISEES

(30) Priority: 04.10.1994 FI 944631
(43) Date of publication of application: 23.07.1997
(73) Proprietor: JAAKKO PÖYRY OY, 01621 Vanda (FI); Eka Chemicals AB, 445 80 Bohus (SE)
(72) Inventor: MYREEN, Bertel, FIN-00240 Helsingfors (FI)
(74) Representative: Hiltunen, Pentti Juhani
(86) International application number: FI9500540
(87) International publication number: WO9610544

(56) References cited:
- EP-A- 0 417 343
- EP-A- 0 607 644
- FI-A- 85 293
- US-A- 4 050 390
- US-A- 4 159 682
- US-A- 5 273 556

## Description

The present invention relates to a method for oxidation at substantial superatmospheric pressure of essentially all organic matter present in a concentrate that has been obtained by evaporation of waste liquors, the oxidation taking place at a sufficiently high temperature with a gas, the greatest part of which is oxygen, and resulting in a small volume of exhaust gas rich in carbon dioxide, and a solution of inorganic salts, from which heavy metals, present in the waste liquor, are separated in solid phase.

Today, the industry is striving to minimise its environmental impact. A part of this impact is the discharge of contaminated effluent to waterways and the emission of polluted gases to the ambient air.

The effluent contains organic substances in low concentrations and inorganic ions, derived from raw materials and from chemicals introduced to the process. The organic matter is sedimented or degraded in the receiving water systems, thus consuming the oxygen in the water. Part of the organic matter is taken in by living organisms. Some of these substances may accumulate in living tissues and further in the food chain. Some of the substances are poisonous. The bulk of the inorganic matter is dissolved salts, which are present in large amounts in the receiving water systems. One of these is sodium chloride, of which there is 3 kg per m³ in the Baltic Sea and about 30 kg per m³ in the oceans. The inorganic matter, however, may also include small quantities of metal ions, which are considered harmful. These are mainly heavy metals such as zinc, manganese, copper and cadmium.

The gases formed in combustion processes generally contain high amounts of carbon dioxide and often sulphur and nitrogen oxides. Recently a lot of attention has been paid on the pyrolysis residues in the gases, i.e. the so called polyaromatic hydrocarbons. Some chloro-organic substances contained in the flue gases are considered an environmental hazard even in very low concentrations.

Effluent as described above are formed in various processes, e.g. in food industry, in the chemical industry and in the forest industry. Some of these liquors are very concentrated and contain large quantities of valuable chemicals so that they are evaporated and burnt for chemical recovery. It is well-known that this is the case with pulp cooking liquors. However, pulp mill bleach plant effluent are so diluted that they are currently not evaporated nor combusted, even if such a method is known e.g. as disclosed in a Finnish patent No 85293.

Similar waste waters are produced even in other processes of the wood-processing industry, e.g. in debarking, in thermomechanical pulping for the production of TMP or CTMP pulp and in the chemical cooking of straw or other annual plants, such as bagasse and different species of grasses.

Typically, these effluent contain less than 10 per cent of dissolved material - often less than one per cent - and the inorganic material typically accounts for about 10 to 50 per cent of the total amount of dissolved material.

The waste waters are discharged to rivers, lakes and seas. In countries with stringent environmental rules and regulations this is done after external biological treatment in aerated lagoons or in activated sludge plants. In these plants the organic matter can to some degree but not completely be decomposed or solidified for separation. The dissolved inorganic matter, especially heavy metals, remain untouched. In principle, heavy metals could be separated from the effluent by means of chemical precipitation. However, with very low concentrations of the inorganic matter, a complete precipitation can not be achieved and the separation of the precipitated matter from large quantities of liquid is difficult.

Evaporation equipment for the concentration of even large effluent flows is today commercially available. When the effluent contains salts of limited solubility, a crystallization of these salts takes place when evaporating these liquors to a high dry solids content. As a result, the heat transfer surfaces of the evaporation equipment become fouled and the evaporation capacity is reduced. This tendency becomes all the more apparent the higher the target concentration of the evaporated liquid is. In evaporation, the effluent is separated in a condensate and a concentrate. The condensate can be reused in the process either as such or after further cleaning. The concentrate, which contains the bulk of the organic matter in the effluent and nearly all of the inorganic matter, needs to be disposed of. The best way to do this is to completely oxidise the organic matter to carbon dioxide and water vapour and to separate the harmful metals from the inorganic incineration residue.

There is equipment designed for incineration of concentrates that are especially difficult to treat. Commercial applications are available in many countries, e.g. as operated by Ekokem Oy in Finland. Also, some industrial enterprises have incineration equipment of their own for the disposal of hazardous waste. Characteristic of these installations is that they operate at atmospheric pressure and use air as an oxidising agent. To achieve a complete oxidation of all organic matter, a combustion temperature of at least 800 °C is required with a retention time of several seconds inside the combustion chamber. When incinerating liquids with high ash content, even if they have been evaporated to a high solids content, the necessary combustion temperature can be reached only by using supplementary fuel. These types of incineration furnaces are marketed by e.g. Ahlstrom Corporation and John Zink Company Ltd.

Air contains only about 21 % of oxygen, the bulk of the remainder being inert nitrogen, which creates a ballast for the incineration. With this ballast, a considerable amount of energy is needed to increase the temperature above 800°C. This is the primary reason why the furnaces need fossil fuel, e.g. natural gas or fuel oil, to achieve and to maintain the required combustion chamber temperature. The fossil fuel of course also requires combustion air, which further increases the amount of inert nitrogen to be passed through the combustion chamber and the subsequent flue gas duct.

The specific volume of gases is high at high temperatures and atmospheric pressure. As a result, the combustion chamber becomes very big and the devices needed for cleaning and transporting the gas become large and also expensive. For this reason the treatment of dilute effluent by evaporation and incineration has not become a common practice in the process industry.

It is generally known that the volume of gas at a certain temperature decreases as the pressure is increased. This fact is utilised in e.g. gasifiers, as disclosed in publications WO-93/022 and WO-93/09205. However, they deal with methods to gasify organic matter in reducing conditions and not with complete oxidation of this matter.

The object of the present invention is to provide a novel and improved method for treating preconcentrated waste liquors by complete oxidation of essentially all organic matter in the liquor to carbon dioxide and water vapour so that, at the same time, all harmful metals can be separated in a simple way from the inorganic incineration residue. This is accomplished in equipment that is substantially smaller and less expensive than the equipment now in use.

In this context the following terms are used:
"final concentrate", a liquor, when continuously fed through an atomising nozzle into a pressurised reaction chamber for essentially complete oxidation of all organic material in said concentrate with highly oxygen-enriched gas, alternatively pure oxygen, that gives a reaction temperature of at least 800°C,
"feed concentrate", a liquor that is continuously fed to a direct-contact evaporator and evaporated therein to form "final concentrate",
"slag", the inorganic residue left after complete oxidation of the "final concentrate",
"molten slag", slag the substantial part of which is in liquid phase,
"brine", a solution formed when slag is dissolved in water,
"solid residue" the insoluble part of "slag" when it is dissolved in water,
"gas", the gas comprising the gaseous reaction products formed when the final concentrate is oxidised in the pressurised reaction chamber, the water vapour formed from the "final concentrate" moisture, the excess oxygen used in the reaction chamber, and the inert gas possibly contained in the oxygen.

According to the present invention there is provided a method comprising a combination of the following steps, all performed under superatmospheric pressure:
(a) a feed of the concentrated liquor is brought into direct contact with a hot gas for heating and evaporation of said liquor to produce a final oxidable concentrate at a temperature close to its boiling point, and to quench the hot gas to a temperature not more than 100°C above the final concentrate boiling point at the prevailing superatmospheric pressure,
(b) the final concentrate is oxidised at a temperature of at least 800°C with such an amount of a gas containing at least 60 per cent by volume of oxygen that there is a surplus of oxygen over that theoretically required for complete oxidation, resulting in a suspension of hot gas and molten slag, and
(c) the molten slag is separated from the hot gas and dissolved in water.

In a preferred embodiment of action of the present invention the method is carried out at a superatmospheric pressure of at least 100 kPa, preferably from about 900 to about 1100 kPa. It is essential that the oxidation is conducted with pressurised gas containing a surplus of oxygen in relation to the amount theoretically needed to completely oxidise all organic matter in the final concentrate. The preferred oxygen content of the pressurized gas is close to 100 per cent by volume, but the pressurised gas can be contaminated with other gases, e.g. nitrogen, carbon monoxide or carbon dioxide. The content of organic matter in the feed concentrate is chosen so that the final concentrate will reach a dry solids content that makes it possible to maintain a sufficient reaction temperature, at least 800°C, preferably 1000°C, in the reaction chamber. At this temperature the slag is in molten state.

According to the present invention, the molten slag is separated from the gas before it is brought into contact with the feed concentrate, the dry solids content of which is to be increased. The molten slag is separated from the gas preferably by force of gravitation and/or with centrifugal force, after which the molten slag is brought into contact with water. Heavy metals contained in the slag will form insoluble salts, mainly carbonates, which can be separated from the brine formed when the slag is brought in contact with water.

According to a preferred embodiment of the present invention, the molten slag is allowed to flow down a small passage to an agitated slag dissolving vessel, wherein water is brought in such quantities that the steam generated will suffice to prevent hot gas from entering the dissolving vessel.

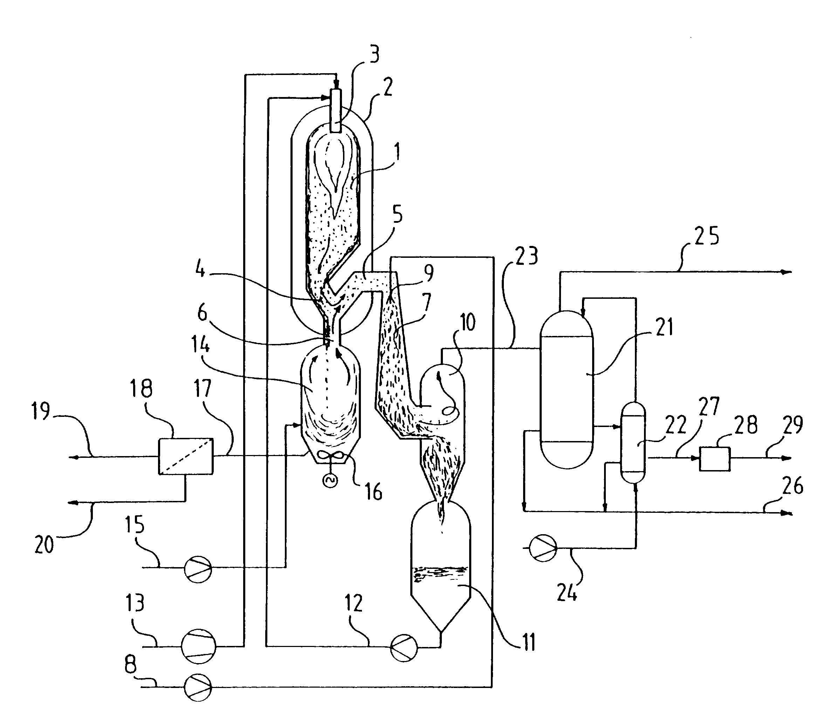

The present invention will hereafter be described in greater detail with reference to the enclosed drawing. The drawing illustrates a schematic side-view of a device especially suitable for carrying out the method of this invention.

In the enclosed Figure, number 1 denotes a reaction chamber, which is under a superatmospheric pressure of at least 100 kPa, preferably about 1000 kPa absolute. The outer shell of the reaction chamber is a pressure vessel 2 containing water with a pressure corresponding to that of the reaction chamber 1. There is therefore no essential pressure difference over the wall of the reaction chamber 1. In reaction chamber 1 there is burner 3, to which the final concentrate to be oxidised is pumped through piping 12. The oxygen is led to burner 3 with the compressor and through the piping 13. If the oxygen has a sufficient pressure in the storage tank, the compressor is unnecessary. The oxygen can be contaminated by other gases, e.g. by nitrogen. In the latter case the minimum oxygen content of the gas is 60 per cent by volume.

Inside reaction chamber 1 a minimum temperature of 800°C is maintained, preferably about 1000°C so that complete oxidation of the organic material is accomplished and all inorganic substances melt to form a molten slag. Some molten slag particles hit the inner surfaces of the reactor and flow down on them. The inner walls of the reactor, built of a suitable metal, can be furnished with fire-proof refractory material. However, according to a preferred embodiment of the present invention, the reactor inner wall is not furnished with any refractory material, but the reactor wall is effectively cooled with water, causing the slag to adhere to the wall and form a solidified layer, reducing the heat transfer through the wall and protecting the metal against corrosion.

Because the reaction chamber shell is subject to almost no stress, it can be designed relatively freely. The lower part can be built with passage 4, through which the gas and the molten slag can flow. With a suitably formed lower part of the reaction chamber, a large proportion of the molten slag is captured on the inner walls of the chamber and is thereby separated from the gas. Because of the high density difference between the slag and the gas, molten slag droplets suspended in the gas can be separated by changing the flow direction of the gas, e.g. by making the gas flow through rising channel 5, while the slag due to gravitation flows downwards through channel 6. Channel 6 leads to slag dissolving vessel 14. Because there is an open passage between reaction chamber 1 and slag dissolving vessel 14, the pressures in these vessels are equal.

The gas and the molten slag are separated at a temperature not essentially different from the reaction temperature inside reactor 1. The hot gas is led to contact device 7, in which the dry solids content of the feed concentrate, pumped in through the piping 8, is increased by bringing it into direct contact with the. hot gas. One embodiment of the present invention is that the concentrate is sprayed into the device with nozzle 9. Inside contact device 7 an intensive mixing of gas and feed concentrate takes place. In contact device 7 the gas is quenched to a temperature close to the temperature of the final concentrate at the outlet of contact device 7. The salt fumes that are contained in the hot gas solidify in contact device 7 and are to a great extent captured by the concentrate. A part of the energy released when the gas is quenched will heat the concentrate to the boiling point corresponding to the prevailing pressure and the surplus energy released will evaporate water from the feed concentrate. This vapour is mixed with the gas that has been quenched.

The liquid phase is separated from the gas in device 10. The final concentrate thus separated is collected in the pressure vessel 11, which acts as a buffer tank balancing concentration variations. The final concentrate that has been heated to the boiling point is then pumped from this tank to burner 3 in the reaction chamber via piping 12.

The molten slag flows through channel 6 down to pressure vessel 14 to which water is led via piping 15. The liquid in vessel 14 is agitated e.g. with impeller 16 in the dissolving vessel. The flow of incoming water and its temperature are adjusted so that a certain amount of steam is released when the molten slag is dissolved in the brine in vessel 14. The steam flows up through channel 6 and prevents the hot gas from entering vessel 14. This steam is mixed with the hot gas in channel 6. In this way the temperature in vessel 14 will not exceed the temperature of the saturated steam released from the brine. This makes the choice of material for pressure vessel 14 easier.

To stabilise the salt content and the volume of the liquid in vessel 14, brine is extracted via piping 17. Some material contained by the brine is not easily soluble. Usually the salt solution is alkaline, because part of the anionic organic matter is removed through oxidation and the corresponding cationic matter present in the slag has reacted with carbon dioxide in the gas and formed carbonates. If this does not happen, for example sodium carbonate or sodium sulphide can be brought in with incoming water through piping 15. Heavy metals contained in the slag form practically insoluble carbonates and sulphides, a solid residue. They can therefore be removed as a solid phase from the salt solution. This is done with e.g. filter 18 or a centrifuge. If necessary, the brine can be cooled before the solid phase is separated. The brine, from which the solid residue is removed, comes then out as flow 19, while the solid residue 20 is removed separately for further treatment.

The cooled exhaust gas flowing out from device 10 via piping 23 consists mainly of carbon dioxide and water vapour. It also contains a certain amount of oxygen necessary to maintain an oxidising environment in all parts of the equipment. The gas in duct 23 also contains a certain amount of droplets of concentrate, because the separation of the final concentrate from the cooled gas in device 10 is incomplete.

The water vapour in the exhaust gas in duct 23 originates partly from the residual moisture in the final concentrate that has been led to burner 3, partly from the reaction between oxygen and hydrogen present in the organic matter of the final concentrate, and partly from pressure vessel 14. Also, the direct evaporation of concentrate in contact device 7 increases the amount of water vapour in the exhaust gas.

By cooling the outgoing gas, most of the water vapour can be condensed and removed in liquid state. Droplets of entrained concentrate in the condensate are also separated, which purifies the gas. At the same time, the gas volume is substantially reduced. The condensation of the water content of the exhaust gas is illustrated in the enclosed Figure by heat exchangers 21 and 22, to which the gas is led via piping 23. Cold water is pumped via piping 24 through heat exchangers 21 and 22, preferably in the countercurrent mode shown in the Figure. The water is heated and vaporised in the heat exchangers and exhausted as low-pressure steam through piping 25. The potentially somewhat contaminated condensate is discharged via piping 26. The quality of the concentrate determines whether it can be used as process water or whether it e.g. should be combined with the waste liquor from which the concentrate derives and recirculated to the equipment described herein.

The quenched gas is exhausted from heat exchanger 22 via piping 27. Its main component is now carbon dioxide. It also contains the surplus oxygen and possibly some traces of organic pollutants. The gas volume is low because of the overpressure and the low temperature after cooling. If required, the gas can still be led through adsorption device 28, for example through a cartridge of activated carbon, before it is used as pure carbon dioxide elsewhere in the process or discharged into the atmosphere via a pressure relief valve and outlet 29.

### Example

A preferred embodiment of the present invention is described in the following example. At the same time, the advantages of the invention over known technology are pointed out.

A pulp mill with a daily production of 1 000 tonnes of bleached softwood pulp can be considered typical for modern pulp industry. The mill uses chlorine dioxine and caustic soda as bleaching chemicals. During the bleaching process, approximately 20 kg of organic substances are discharged per tonne of pulp produced. Bleaching chemical residues, an additional 20 kg of salts per tonne of pulp, are also discharged. The salt is mostly sodium chloride. Part of the sodium is bound to organic acids that have been formed during the bleaching process. These substances are transferred into the bleaching plant effluent. For this effluent a chemical oxygen demand (COD) of 22 kg per tonne of pulp is typical.

To achieve a complete oxidation of all organic matter - including chlorinated organic matter - the oxidation must occur with a surplus of oxygen at a temperature of about 1000°C. With the present invention this can be accomplished in the following way:

Waste liquor 8 is expected to have reached a dry solids content of about 35% by means of evaporation. It is then pumped to device 7, in which water vapour is evaporated from the concentrate. The overpressure in the device is 10 bar. The concentrate in collection vessel 11 then reaches the temperature of 180°C with a dry solids content of about 42%. This solids content - of which half is oxidable organic matter and the rest inorganic substances - is sufficient for maintaining a reaction temperature of 1000°C in the reaction chamber, provided pure oxygen is used for the oxidation. It is assumed that a surplus of 3% of oxygen is used in the reactor.

In this case 0.253 kg/s of oxygen 13 is brought to the reactor to achieve in principle complete oxidation. The reaction products formed are 0.258 kg/s of inorganic molten slag and 1.090 kg/s of gas, consisting of carbon dioxide, water vapour and surplus oxygen. At a temperature of 1000°C and with a superatmospheric pressure of 10 bar the gas flow rate through the reactor outlet is 0.515 m³/s. With a gas velocity of 10 m/s the flow cross section is 5.15 dm², corresponding to a pipe with an inner diameter of about 250 mm.

The flow of molten slag through reactor outlet 4 is about 0.215 dm³/s. With a flow velocity of 1 m/s the molten slag fills a flow cross section of about 0.02 dm³, which is below 1% of that of the gas. The density of the gas in that state is about 2.11 kg/m³, while the density of the flowing slag is about 1.200 kg/m³. The separation of the molten slag from the gas is therefore not difficult.

In case a salt concentrate of about 35% is kept in the dissolving vessel 14, an amount of 0.92 kg/s of water has to be added via piping 15. Of the water that has been added, about 0.17 kg/s is vaporised when the hot molten slag is quenched and dissolved in water. At an overpressure of 10 bar, the vapour reaches a temperature of about 180°C and the flow rate is 0.038 m³/s. If an inner diameter of 100 mm is chosen for conduit 6, the steam upward flow velocity in the passage is about 5 m/s, which is sufficient to prevent hot gas from entering vessel 14. If dissolving vessel 14 is designed for a residence time of 15 minutes, the required brine volume is about 0.7 m³ in this vessel.

After direct evaporation in device 10 the exhaust gas to heat exchanger 21 contains about 0.355 kg/s of carbon dioxide, 0.0075 kg/s of oxygen and 1,151 kg/s of water vapour. The total flow rate for the gas at an overpressure of 10 bar and temperature of 180°C is 0.272 m³/s. If the chosen inner diameter for piping is 200 mm, the gas flow velocity will be about 8.5 m/s. The vapour pressure in the gas is high, about 886 kPa, which makes it possible to condense a substantial part of the water vapour from the exhaust gas 23. If the gas is cooled to 100°C in the heat exchanger 21, more than 98% of the vapour will condensate and the total exhaust gas flow becomes about 0.380 kg/s. The exhaust gas flow at 10 bar overpressure is about 20 dm³/s, and can be transported in a pipe with an inner diameter of 80 mm.

For comparison and to point out the advantages of the invention over the state-of-the-art technology, the same calculation is performed for the case where evaporated effluent from the same assumed bleach plant is incinerated in the conventional way.

With conventional technology, the concentrate would be disposed of in an atmospheric incinerator with air as the source of oxygen. It is likely that the waste liquor would be evaporated to a dry solids content higher than 35 %, which -as described in the above example - would be sufficient according to the present invention. Let us assume that the concentrate is evaporated to a dry solids content of 50% before it is fed into the incinerator.

To reach a combustion temperature of 1000°C, supplementary fuel is needed in the incinerator. Because of the nitrogen ballast in the combustion air, about 0.6 kg of oil is needed for each kilogram of dry solids of concentrate. Because the gases are of atmospheric pressure, water vapour can not be condensed from the exhaust gas at temperatures above 100°C and thus used for production of pressurised steam. Provided no large quantities of low-grade warm water are produced, the water vapour is exhausted with the gases, which has been assumed when calculating the values in the table below.

The following Table gives data for comparison of concentrate oxidation as accomplished with the present invention and as performed with the state-of-the-art technology. The figures refer to the pulp mill bleach plant example given previously.

Comparison between the invention and state-of-the-art technology

| | | Invention | State-of-the-art |
|---|---|---|---|
| Feed dry solids content | % | 35.0 | 50.0 |
| Oxygen consumption | kg/h | 912 | - |
| Oil consumption | kg/h | - | 995 |
| Reactor temperature | °C | 1000 | 1000 |
| Residence time in reactor | s | 2 | 2 |
| Reactor volume | m³ | 1.0 | 23.2 |
| Exhaust gas temperature | °C | 100 | 100 |
| Discharged exhaust gas volume | m³/h | 72 | 25 400 |

As can be seen, the present invention makes it possible to oxidise the concentrate at the required 1000°C reactor temperature with a lower dry solids content of the feed concentrate. In this example of the invention the oxidation is done with pure oxygen. Also, the novel procedure does not require any supplementary fuel, contrary to conventional methods. The amounts of oxygen in the novel technology and fuel oil in the state-of-the-art technology are nearly equal. As the cost of oxygen per kg is about half the cost of fuel oil per kg, the operating costs of the novel technology will be considerably smaller than those of conventional methods.

The present invention leads to a significantly smaller equipment volume as can be seen in the comparison between the required reactor volumes. According to the present invention, the reactor volume is less than 5% of the combustion chamber volume in conventional incinerators with corresponding design values. The difference between the exhaust gas volumes is notable, too. This is reflected in the size and cost of the equipment for transporting and cleaning of the exhaust gas.

## Claims

1. A method for oxidation of concentrated liquors containing oxidable organic matter, comprising a combination of the following steps, all performed under superatmospheric pressure:
(a) a feed of the concentrated liquor (8) is brought into direct contact (7) with a hot gas (5) for heating and evaporation of said liquor to produce a final oxidable concentrate (11) at a temperature close to its boiling point, and to quench the hot gas to a temperature not more than 100°C above the final concentrate boiling point at the prevailing superatmospheric pressure,
(b) the final concentrate (11) is oxidised (1) at a temperature of at least 800°C with such an amount of a gas (13) containing at least 60 per cent by volume of oxygen that there is a surplus of oxygen over that theoretically required for complete oxidation, resulting in a suspension of hot gas (5) and molten slag (6), and
(c) the molten slag is separated (6) from the hot gas and dissolved in water (15).

2. The method of claim 1 carried out at a pressure of at least 100 kPa above atmospheric pressure, preferably at 900 -1100 kPa.

3. The method of claims 1 and 2, comprising oxidising with a gas (13) containing an amount of oxygen theoretically sufficient to completely oxidise all organic matter in the final concentrate to carbon dioxide and water.

4. The method of claims 1 and 2, comprising separating the molten slag and the hot gas by gravitation and/or centrifugal force.

5. The method of claim 4 wherein the separated molten slag is directed to flow through an open duct (6) into an agitated (16) vessel (14) and water is fed into the vessel (14) in a such quantity that the steam formed when the molten slag is quenched with the water, is sufficient to prevent any substantial quantity of hot gas from entering the vessel (14) through the duct (6).

6. The method of claim 5, comprising incorporating with carbonate ions in the water in the vessel (14) to form insoluble carbonates of metals that are contained in the molten slag.

7. The method of claim 5, comprising incorporating sulphide ions with the water (16) into the vessel (14) to form insoluble sulphides of metals that are contained in the molten slag.

8. The method of claim 6 or 7 wherein a solid residue (20), comprising the insoluble carbonates and/or sulphides, is separated from the brine (19) by filtration (18) or by using centrifugal force.

9. The method of claims 1 and 2 wherein the quenched gas (23) is further indirectly cooled (21, 22) to a temperature preferably below 100 °C in order to condense water vapour from the exhaust gas (27) and to substantially reduce its volume.

10. The method of claim 9 wherein the cooling is effected with boiling water, thus generating steam that is withdrawn through piping (25).

11. The method of claim 9 wherein the exhaust gas after cooling (27) is led through an adsorbing medium (28), preferably activated carbon, to remove possible traces of organic matter.

12. The method of claim 1 wherein the oxygen-containing gas (13) used for oxidation is off-gas from some other process, e.g. an ozone bleach stage in the pulp mill.

## Patentansprüche

1. Verfahren zur Oxidation von konzentrierten Abfallflüssigkeiten, die oxidierbares organisches Material enthalten, mit einer Kombination der folgenden Schritte, die alle bei einem über dem Atmosphärendruck liegenden Druck ausgeführt werden:
(a) eine Speisemenge der konzentrierten Abfallflüssigkeit (8) wird in direktem Kontakt (7) mit einem heißen Gas (5) zum Erhitzen und Verdampfen der Abfallflüssigkeit gebracht, um ein abschließendes oxidierbares Konzentrat (11) bei einer Temperatur nahe an dessen Siedepunkt zu erzeugen und um das heiße Gas auf eine Temperatur abzukühlen, die nicht mehr als 100°C über dem Siedepunkt des abschließenden Konzentrats bei dem vorherrschenden, über dem Atmosphärendruck liegenden Druck liegt,
(b) das abschließende Konzentrat (11) wird bei einer Temperatur (1) von zumindest 800°C mit einer derartigen Menge eines Gases (13), das zumindest 60 Volumenprozente Sauerstoff enthält, oxidiert, daß sich ein Sauerstoffüberschüß gegenüber dem ergibt, der theoretisch für eine vollständige Oxidation erforderlich ist, was zu einer Suspension von heißem Gas (5) und geschmolzener Schlacke (6) führt, und
(c) die geschmolzene Schlacke wird (6) von dem heißen Gas getrennt und in Wasser (15) gelöst.

2. Verfahren nach Anspruch 1, das bei einem Druck von zumindest 100 kPa über dem Atmosphärendruck ausgeführt wird, vorzugsweise bei 900 - 1100 kPa.

3. Verfahren nach Anspruch 1 und 2, das die Oxidation mit einem Gas (13) umfaßt, das eine Sauerstoffmenge enthält, die theoretisch ausreichend ist, um das gesamte organische Material in dem abschließenden Konzentrat vollständig auf Kohlendioxyd und Wasser zu oxidieren.

4. Verfahren nach den Ansprüchen 1 und 2, das die Trennung der geschmolzenen Schlacke und des heißen Gases durch Schwerkraft und/oder Zentrifugalkraft umfaßt.

5. Verfahren nach Anspruch 4, bei dem die getrennte geschmolzene Schlacke so gelenkt wird, daß sie durch einen offenen Kanal (6) in ein einer Agitation (16) unterworfenes Gefäß (14) fließt und Wasser in das Gefäß (14) in einer derartigen Menge eingespeist wird, daß der bei der Abkühlung der geschmolzenen Schlacke mit dem Wasser gebildete Dampf ausreicht, um zu verhindern, daß irgendeine wesentliche Menge an heißem Gas in das Gefäß (14) durch den Kanal (16) eintritt.

6. Verfahren nach Anspruch 5, das die Einleitung von Karbonat Ionen in das Wasser in dem Gefäß (14) umfaßt, um unlösliche Karbonate von Metallen zu bilden, die in der geschmolzenen Schlacke enthalten sind.

7. Verfahren nach Anspruch 5, das die Einfügung von Sulfid-Ionen in das dem Gefäß (14) zugeführte Wasser (16) umfaßt, um unlösliche Sulfide von Metallen zu bilden, die in der geschmolzenen Schlacke enthalten sind.

8. Verfahren nach Anspruch 6 oder 7, bei dem ein fester Rückstand (20), der die unlöslichen Karbonate und/oder Sulfide umfaßt, von der Lauge (19) durch Filtrieren (18) oder durch die Verwendung von Zentrifugalkräften getrennt wird.

9. Verfahren nach Anspruch 1 und 2, bei dem das abgekühlte Gas (23) weiterhin indirekt (21,22) auf eine Temperatur vorzugsweise unter 100°C gekühlt wird, um Wasserdampf von dem Abgas (27) zu kondensieren und um dessen Volumen wesentlich zu verringern.

10. Verfahren nach Anspruch 9, bei dem das Kühlen mit siedendem Wasser bewirkt wird, wodurch Dampf erzeugt wird, der durch eine Rohrleitung 25 abgezogen wird.

11. Verfahren nach Anspruch 9, bei dem das Abgas nach dem Kühlen (27) durch ein adsorbierendes Medium (28), vorzugsweise Aktivkohle geleitet wird, um mögliche Spuren von organischem Material zu entfernen.

12. Verfahren nach Anspruch 1, bei dem das Sauerstoff enthaltende Gas (13), das für die Oxidation verwendet wird, ein Abgas von irgendeinem anderen Verfahren, beispielsweise einer Ozon-Bleichstufe in dem Zellstoffwerk, ist.

## Revendications

1. Procédé pour l'oxydation de liqueurs concentrées contenant une matière organique oxydable, comprenant une combinaison des étapes suivantes, que l'on effectue toutes sous une pression suratmosphérique:
(a) on amène une charge de la liqueur concentrée (8) en contact direct (7) avec un gaz chaud pour chauffer et évaporer ladite liqueur afin de produire un concentré oxydable final (11) à une température voisine de son point d'ébullition, et de refroidir brusquement le gaz chaud à une température ne dépassant pas de plus de 100°C le point d'ébullition du concentré final sous la pression suratmosphérique régnante,
(b) on oxyde (1) le concentré final (11) à une température d'au moins 800°C avec un gaz (13) contenant au moins 60 % en volume d'oxygène en une quantité telle qu'il y a un excès d'oxygène par rapport à la quantité théoriquement nécessaire pour une oxydation complète, ce qui donne une suspension de gaz chaud (5) et de scories fondues (6), et
(c) on sépare les scories fondues (6) du gaz chaud et on les dissout dans l'eau (15).

2. Procédé selon la revendication 1, effectué sous une pression supérieure d'au moins 100 kPa à la pression atmosphérique, de préférence sous 900 - 1100 kPa.

3. Procédé selon les revendications 1 et 2, comprenant l'oxydation avec un gaz (13) contenant une quantité d'oxygène théoriquement suffisante pour oxyder complètement toute la matière organique du concentré final en dioxyde de carbone et en eau.

4. Procédé selon les revendications 1 et 2, comprenant la séparation des scories fondues et du gaz chaud par la force de gravitation et/ou la force centrifuge.

5. Procédé selon la revendication 4, dans lequel on fait couler les scories fondues séparées à travers une conduite ouverte (6) dans un récipient (14) muni d'un agitateur (16) et on introduit de l'eau dans le récipient (14) en une quantité telle que la vapeur formée lors du refroidissement brusque des scories fondues avec l'eau est suffisante pour empêcher le gaz chaud de rentrer en une quantité importante dans le récipient (14) par l'intermédiaire de la conduite (6).

6. Procédé selon la revendication 5, comprenant l'incorporation d'ions carbonate dans l'eau du récipient (14) pour former des carbonates insolubles de métaux contenus dans les scories fondues.

7. Procédé selon la revendication 5, comprenant l'incorporation d'ions sulfure avec l'eau (16) dans le récipient (14) pour former des sulfures insolubles de métaux contenus dans les scories fondues.

8. Procédé selon la revendication 6 ou 7, dans lequel on sépare de la solution salée (19) un résidu solide (20) comprenant les carbonates et/ou sulfures insolubles, par filtration (18) ou au moyen de la force centrifuge.

9. Procédé selon les revendications 1 et 2, dans lequel on refroidit encore indirectement (21, 22) le gaz refroidi (23) à une température de préférence inférieure à 100°C, pour condenser la vapeur d'eau du gaz d'évacuation (27) et réduire de façon importante son volume.

10. Procédé selon la revendication 9, dans lequel le refroidissement s'effectue avec de l'eau bouillante, ce qui produit de la vapeur que l'on soutire par l'intermédiaire de la canalisation (25).

11. Procédé selon la revendication 9, dans lequel, après le refroidissement (27), on fait passer le gaz d'évacuation à travers un milieu adsorbant (28), de préférence du carbone activé, pour éliminer les traces éventuelles de matière organique.

12. Procédé selon la revendication 1, dans lequel le gaz contenant de l'oxygène (13) utilisé pour l'oxydation est un effluent gazeux issu de quelque autre procédé, par exemple d'une étape de blanchiment à l'ozone dans la fabrique de pâte à papier.
